# EUROPEAN PATENT SPECIFICATION

(11) **EP 3 950 341 B1**
(45) Date of publication and mention of the grant of the patent: **07.05.2025**
(21) Application number: 20783737.8
(22) Date of filing: 26.03.2020
(51) Int. Cl.: B44C 1/17, B32B 27/20, B32B 7/06, B29C 45/14, B44F 1/02

(54) **TRANSFER SHEET AND METHOD OF MANUFACTURING DECORATIVE MOLDED PRODUCT**
TRANSFERFOLIE UND VERFAHREN ZUR HERSTELLUNG EINES DEKORATIVEN FORMPRODUKTS
FEUILLE DE TRANSFERT ET PROCÉDÉ DE FABRICATION DE PRODUIT MOULÉ DÉCORATIF

(30) Priority: 29.03.2019 JP 2019069062
(43) Date of publication of application: 09.02.2022
(73) Proprietor: Dai Nippon Printing Co., Ltd., Tokyo 162-8001 (JP)
(72) Inventor: NODA, Akihisa, Tokyo 162-8001 (JP); OOTA, Naoki, Tokyo 162-8001 (JP); SAKONAKA, Kazuyuki, Tokyo 162-8001 (JP); NAKATSUGAWA, Yuji, Tokyo 162-8001 (JP)
(74) Representative: Beck Greener LLP
(86) International application number: PCT/JP2020/013709
(87) International publication number: WO 2020/203659

(56) References cited:
- WO-A1-2016/133101
- WO-A1-2016/133101
- JP-A- 2012 183 808
- JP-A- 2012 183 808
- JP-A- 2015 077 713
- JP-A- 2015 077 713
- JP-A- 2015 098 095
- JP-A- 2015 098 095
- JP-A- 2016 064 636
- JP-A- 2016 064 636
- JP-A- 2016 190 332
- JP-A- 2016 190 332
- JP-A- 2016 190 333
- JP-A- 2016 190 333
- JP-A- 2018 144 235
- JP-A- 2018 144 235
- JP-A- S60 264 213
- JP-B2- H 044 926
- JP-B2- H 044 926

## Description

### Technical Field

This invention relates to a transfer sheet and a method for producing a decorative molded article with the transfer sheet.

### Background Art

Conventionally, in the fields such as household electric appliances, automobile interior parts, and miscellaneous goods, high functionality and design decorativeness have been exhibited by decorating the surface of the product with, for example, characters and patterns. A transfer method is known as a method of decorating the surface of a product. The transfer method is a method of decoration by using a transfer sheet having a transfer layer including, for example, a release layer, a pattern layer, and an adhesive layer formed on a substrate, heating and pressurizing to bring the transfer sheet into close contact with the object to be transferred, peeling off the substrate and the release layer, and transferring only the transfer layer to the surface of the object to be transferred.

For example, in-mold molding, as described in PLT 1, is known as a method of decoration by transfer on the surface of 3-dimensional molded articles. In the method described in PLT 1, a transfer foil having unevenness formed on the surface opposite to the transfer layer of the substrate is inserted into a mold, and the resin is injection-molded from the side of the transfer layer to impart unevenness to the surface of the molded resin. PTL 2 and PTL 3 provide further examples of transfer sheets.

### Citation List

### Patent Literature

PTL 1: Japanese Patent 5891590
PTL 2: Japanese Patent Application 2015 098095 A
PTL 3: Japanese Patent Application 2016 190332 A

### Summary of Invention

### Technical Problem

In the method shown in PLT 1, unevenness shape can be easily and inexpensively formed on the surface of the molded article. As described above, in recent years, there have been required developments of, for example, a molded article capable of giving the feel when actually touched by a hand by imparting an unevenness shape, and a transfer sheet capable of imparting an unevenness shape that allows the feel to be felt. While it is possible to provide the feel by adding an unevenness shape to the surface of the molded article, the unevenness shape on the surface is sometimes visible with the eyes.

The present invention has been made in view of such circumstances and an objective thereof is to provide a transfer sheet that easily improves the feel on the surface of a decorative molded article and can provide a good aesthetic appearance, and a method for producing the decorative molded article.

### Solution to Problem

As a result of intensive investigations by the present inventors, it has been found that using a transfer sheet having a specific pattern layer thickness and a gloss value on the surface of the release layer allows not only imparting a unevenness shape that provides the good feel to the surface of an obtained decorative molded article, but also providing an unexpected effect that the unevenness shape is barely recognized visually by the user, and the present invention has thus been completed. The object is achieved by the subject-matter of claim 1. Advantageous further developments are subject-matter of the dependent claims.

### Advantageous Effects of Invention

Using the transfer sheet of the present invention allows imparting a design having a pattern that is difficult for the user to see with the eyes but can be touched on the surface of a decorative molded article. That is, the present invention can provide a transfer sheet that easily improves the feel on the surface of a decorative molded article and can provide a good aesthetic appearance. In addition, the present invention can provide a method for producing a decorative molded article having the good feel and an aesthetically pleasing design.

### Brief Description of Drawings

[Fig. 1] Fig. 1 is a schematic cross-sectional view showing one embodiment of a transfer sheet of the present invention.
[Fig. 2] Fig. 2 is an enlarged cross-sectional schematic view showing a pattern layer in a transfer sheet of the present invention.
[Fig. 3] Fig. 3 is a schematic cross-sectional view showing a decorative molded article produced by using a transfer sheet of the present invention.

### Description of Embodiments

### [Transfer Sheet]

The transfer sheet of the present invention comprises a release sheet and a transfer layer, wherein the release sheet includes a substrate, a release layer provided on one surface of the substrate, and a pattern layer provided on the other surface of the substrate, the pattern layer has a thickness of 5 µm or more and 20 µm or less, and after the release sheet and the transfer layer are peeled off from each other, a gloss value of a surface of the release layer opposite to the substrate with incident light at 60° is 60 or less.

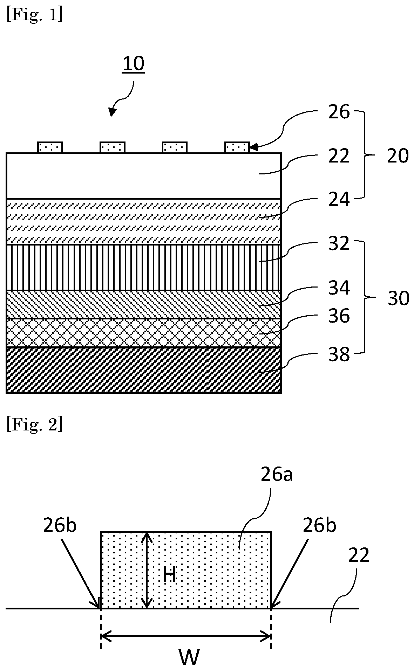

Fig. 1 is a schematic cross-sectional view showing one embodiment of a transfer sheet of the present invention. A transfer sheet 10 in Fig. 1 includes a release sheet 20 and a transfer layer 30.

In Fig. 1, the release sheet 20 includes a release layer 24 provided on one surface of a substrate 22 and a pattern layer 26 on the other surface of the substrate 22.

In Fig. 1, a transfer layer 30 includes a protective layer 32, a print layer 36, and an adhesive layer 38 in this order from the side of the release sheet 20. The protective layer 32 and the release layer 24 are preferably in contact with each other. The transfer layer 30 may further have a primer layer 34 between the protective layer 32 and the print layer 36.

### [Release sheet]

The release sheet includes a substrate, a release layer provided on one surface of the substrate, and a pattern layer including a convex portion pattern provided on the other surface of the substrate. In the present invention, it is required that the pattern layer has a thickness of 5 µm or more and 30 µm or less and the gloss value (incident light at 60°) of the surface of the release layer opposite to the substrate (hereinafter referred to as the release layer surface) is 60 or less after the release sheet and the transfer layer are peeled off from each other. The gloss value is measured in accordance with JIS Z8741:1997 and is the average value of 20 locations in the release layer surface.

The gloss value of the release sheet is measured by, for example, the following method.
(1) A cellotape (registered trademark) produced by NICHIBAN Co., Ltd. is attached on the transfer layer side of a transfer sheet. Then, in accordance with JIS Z 0237: 2009, the transfer layer is peeled from the transfer sheet together with cellotape (registered trademark) at a peeling speed of 5.0 mm/sec in the 180° direction to expose the release layer.
(2) a 100 µm black ABS film is placed through water on the pattern layer side of the release sheet, and the release sheet and the ABS film are attached with each other.
(3) The gloss value of the release layer surface (the surface on the transfer layer side) is measured.

In the transfer sheet of the present invention, the release layer having the gloss value causes the surface of the substrate side of the transfer layer of a decorative molded article to be formed into a matted surface. In addition, when a decorative molded article is produced by using the transfer sheet of the present invention, at least the substrate, the release layer, and the transfer layer are deformed according to the shape of the pattern layer by pressure. This forms a recess portion pattern in the transfer layer of the decorative molded article due to the convex portion of the pattern layer.

The surface of the decorative molded article can be provided with a pattern with a recess portion and thus a matted design by using the transfer sheet provided with the release sheet in which the thickness of the pattern layer is 5 µm or more and 30 µm or less and the gloss value (incident light at 60°) of the surface of the release layer opposite to the substrate is 60 or less. For this decorative molded article, the user can feel the unevenness caused by the pattern; however, barely recognize the unevenness visually. That is, the transfer sheet of the present invention can easily improve the feel on the surface of a decorative molded article and can provide the decorative molded article having a good aesthetic appearance. For example, when using a transfer sheet with the transfer layer having a wood pattern layer, there can be added to a molded article a design such that the user touches and then can unexpectedly feel the unevenness based on the wood pattern while a beautiful wood pattern can be recognized visually because the unevenness of the pattern layer is barely recognized visually.

The thickness of the pattern layer with less than 5 µm causes the recess portion pattern formed on a decorative molded article to be shallow or the recess portion pattern not to be formed, and therefore the user fails to feel the pattern. In addition, the thickness of the pattern layer with more than 30 µm causes light scattering due to the recess portion pattern of the decorative molded article to be large, and therefore the pattern becomes easily recognized visually. When the transfer layer has a print layer, the light scattering due to the recess portion pattern becomes large, and therefore the visibility of the print layer is lowered and the design decorativeness is lowered. The thickness of the pattern layer of the release sheet is 5 µm or more, and more preferably 10 µm or more. In addition, the thickness of the pattern layer is 20 µm or less.

The gloss value (incident light at 60°) on the surface of the release layer with more than 60 causes the contrast between the recess portion pattern and the portion other than the pattern to be large, and therefore the recess portion pattern is easily recognized visually. The gloss value (incident light at 60°) is preferably 50 or less, and more preferably 45 or less. The low gloss value may cause an underlying print layer in making the decorative molded article to be barely recognized visually, and therefore the gloss value is preferably 5 or more, and more preferably 7 or more.

Hereinafter, layers of the release sheet will be described in detail.

### <Substrate>

The form of a substrate may be either sheet shape or film shape.

Examples of the substrates include a plastic film composed of resins such as: polyolefin-based resins including polyethylene and polypropylene; vinyl-based resins including polyvinyl chloride, polyvinylidene chloride, polyvinyl alcohol, ethylene/vinyl acetate copolymer, and ethylene/vinyl alcohol copolymer; polyester-based resins including polyethylene terephthalate, polyethylene naphthalate, and polybutylene terephthalate; acrylic-based resins such as polymethyl (meth)acrylate and polyethyl (meth)acrylate; styrene-based resins including polystyrene; and polyamide-based resins represented by nylon 6 or nylon 66.

Of these plastic films, a biaxially stretched polyester film having excellent heat resistance and dimensional stability is preferable.

The thickness of a substrate is preferably 12 to 150 µm, and more preferably 25 to 100 µm. The above thickness not only ensures excellent handling, but also provides good shape followability to a pattern layer during in-mold molding.

In addition, to improve the adhesiveness with a release layer, the surface of the substrate may be previously subjected to not only physical treatment such as corona discharge treatment and oxidation treatment, but also application of a paint called an anchor agent or a primer.

### <Release layer>

A release layer is not particularly limited as long as it is a material having a predetermined peel strength with a layer adjacent to the release layer in a transfer layer. Examples of the resin component used for the release layer include a cured product of a thermosetting resin composition and a cured product of an ionizing radiation curable resin composition. The layer adjacent to the release layer in the transfer layer is, for example, a protective layer.

Specific examples of the resin component used for the release layer include fluorine-based resins, silicone-based resins, acrylic based resins, polyester-based resins, polycarbonate-based resins, polyolefin-based resins, polystyrene-based resins, polyurethane-based resins, and vinyl chloride-vinyl acetate based copolymer resins.

Of the resin components, there is preferable a cured product of an ionizing radiation curable resin composition that has excellent strength and can be instantly cured to provide an accurate and precise shape.

The ionizing radiation curable resin is a resin that is crosslinked and cured by irradiation with ionizing radiation, and has an ionizing radiation curable functional group. The ionizing radiation curable functional group is a group that is crosslinked and cured by irradiation with ionizing radiation, and preferable examples thereof include a functional group having an ethylenic double bond such as a (meth)acryloyl group, a vinyl group, and an allyl group. In addition, ionizing radiation means an electromagnetic wave or a charged particle beam having an energy quantum capable of polymerizing or crosslinking molecules; ultraviolet rays (UV) or electron beams (EB) are typically used; and electromagnetic waves such as X-rays and γ-rays and charged particle beams such as α-rays and ion rays are also included. Of these, the cured product of the electron beam curable resin composition is particularly preferable.

Specifically, the ionizing radiation curable resin can be used by appropriately selecting from the group consisting of polymerizable monomers and polymerizable oligomers commonly used as ionizing radiation curable resins.

As a polymerizable monomer, a (meth)acrylate-based monomer having a radically polymerizable unsaturated group in the molecule is preferable, and a polyfunctional (meth)acrylate monomer is particularly preferable.

Examples of the polyfunctional (meth)acrylate monomer include a (meth)acrylate monomer having two or more ionizing radiation curable functional groups in the molecule and having at least a (meth)acryloyl group as the functional group.

From the viewpoints of heat resistance and moldability, the number of functional groups is preferably 2 or more and 8 or less, more preferably 2 or more and 6 or less, still more preferably 2 or more and 4 or less, and particularly preferably 2 or more and 3 or less. These polyfunctional (meta)acrylate monomers may be used singly or in combination of two or more. In addition, one or more of these polyfunctional (meth)acrylate monomers and one or more of the polymerizable oligomers described below may be mixed into a composition for use. Preparing a composition by mixing both the monomer and the oligomer can adjust, for example, the crosslink density of a cured product and the molecular weight between crosslinks, and can adjust various physical properties of the cured product.

Examples of the polymerizable oligomer include a (meth)acrylate oligomer having two or more ionizing radiation curable functional groups in the molecule and having at least a (meth)acryloyl group as the functional group. Examples thereof include urethane (meth)acrylate oligomer, epoxy (meth)acrylate oligomer, polyester (meth)acrylate oligomer, polyether (meth)acrylate oligomer, polycarbonate (meth)acrylate oligomer, and acrylic (meth)acrylate oligomer.

From the viewpoints of heat resistance and moldability, the number of functional groups of these polymerizable oligomers is preferably 2 or more and 8 or less, and the number of functional groups is more preferably 6 or less as the upper limit, still more preferably 4 or less, and particularly preferably 3 or less.

From the viewpoints of heat resistance and moldability, the weight average molecular weight of the monomer and oligomer used for a release layer is preferably 250 or more and 30000 or less, more preferably 250 or more and 20000 or less, and still more preferably 250 or more and 15000 or less. The weight average molecular weight is an average molecular weight measured by GPC analysis and converted with standard polystyrene.

Additives such as curing agents and polymerization initiators may be added to a resin composition as necessary.

A release layer may contain a releasing agent to improve the releasability between the release layer and an adjacent layer in a transfer layer.

Examples of the releasing agent include wax such as synthetic wax and natural wax. Polyolefin wax such as polyethylene wax and polypropylene wax are preferable, as the synthetic wax. In addition, from the viewpoints of improving the hardness of the release layer and suppressing the bleeding of the releasing agent, a releasing component capable of crosslinking and curing such as reactive silicone may be used as the releasing agent. For example, an electron beam curable silicone compound can be used.

The mass ratio of the releasing agent to the total solid content of the release layer is preferably 0.3 to 10% by mass, and more preferably 0.5 to 5% by mass.

The thickness of a release layer is preferably 0.5 to 50 µm, and more preferably 0.5 to 10 µm. This range ensures that the shape followability of the pattern layer provided on the opposite side to a substrate is good during the step of producing a decorative molded article. In addition, the release layer and the transfer layer are easily peeled off from each other.

The release layer can be formed by a known printing method such as a gravure printing method, an offset printing method, a letterpress printing method, and a silk screen printing method.

The surface being in contact with a protective layer of a release layer satisfies the above gloss value. The method of forming the surface having the above gloss value includes (1) means for forming a release layer by adding a matting agent to the above resin, and (2) means for providing an uneven layer between a release layer and a substrate. Due to the controllability of the gloss value, it is preferable to use the means (1).

In the case of the means (1), a release layer is preferably provided on the entire surface of a substrate.

There can be used one or more matting agents included in the release layer selected from the group consisting of organic particles and inorganic particles.

Examples of the organic particles include particles composed of, for example, polymethylmethacrylate, polyacrylic-styrene copolymer, melamine resin, polyurethane-based resin, polycarbonate-based resin, polystyrene-based resin, polyvinyl chloride-based resin, benzoguanamine-melamine-formaldehyde condensate, silicone-based resin, fluorine-based resin, and polyester-based resin.

Examples of the inorganic particles include particles composed of, for example, silica, alumina, antimony, zirconia, and titania.

The shape of the particles may be spherical or irregular. Of these particles, irregularly shaped silica is preferable from the viewpoint of a cost.

The average particle size of a matting agent is preferably 0.5 to 60 µm, and more preferably 0.7 to 25 µm.

In the present description, the average particle size is the average value (arithmetic mean size) of the particle size that is obtained by observing the cross section in the thickness direction of the layer with a scanning electron microscope (SEM) under the conditions of an acceleration voltage of 3.0 kV and a magnification of 50000 times and then measuring 100 non-aggregates of particles selected randomly.

The content of a matting agent with respect to the total solid content of a release layer is preferably 0.1% by mass or more and less than 20% by mass, preferably 0.5% by mass or more and 17% by mass or less, and more preferably 1.0% by mass or more and 15% by mass or less. With the above content, the surface shape of the release layer can be optimized and the above gloss value can be easily satisfied.

In the case of the means (2), an uneven layer includes a resin and a matting agent. The uneven layer may be formed on the entire surface of a substrate, or may be partially provided on the substrate. Appropriately adjusting the content of the matting agent with respect to the resin can form an appropriate fine unevenness structure on the surface of a release layer. In addition, the release layer is preferably formed on the entire surface of the substrate.

The resin component of an uneven layer is not particularly limited as long as it is a material having excellent adhesion to a release layer and good dispersibility of a matting agent. Examples of the resin component of the uneven layer include a commonly used thermoplastic resin, a cured product of a thermosetting resin composition, and a cured product of an ionizing radiation curable resin composition. Specific examples of the resin component include an acrylic based resin, a polyester-based resin, a polyolefin-based resin, a polystyrene-based resin, a polyurethane-based resin, and a cellulose-based resin. Particularly, forming a matting layer with a thermoplastic resin can improve the adhesion to the release layer and prevent peeling between the release layer and the matting layer.

There can be used one or more matting agents selected from the group consisting of the organic particles and inorganic particles described in (1). Particularly, irregularly shaped silica is preferable from the viewpoint of a cost.

The thickness of an uneven layer is preferably 0.5 to 50 µm, more preferably 0.5 to 25 µm, and still more preferably 0.5 to 10 µm. The thickness of the uneven layer and the thickness of a release layer are set within the above ranges, thereby imparting a fine unevenness structure to the surface of a release layer, and easily controlling the gloss value of the surface of the release layer within the above ranges.

### <Pattern Layer>

A pattern layer is a layer provided on a substrate and is located on the surface side opposite to a release layer. Examples of the pattern include wood, stone, cloth, sand, circle, quadrangle, polygon, geometric patterns, and characters. The pattern shape of the pattern layer is preferably synchronized with the pattern of the print layer, which will be described later; however, the positions of the pattern shape of the pattern layer and the pattern of the print layer do not necessarily have to match, and the pattern shape may be similar to the pattern on the print layer.

The resin component used in a pattern layer is not particularly limited; however, the cured product of a curable resin composition is preferably included, in consideration of, for example, the ease of patterning and the shape retention during transfer. Examples of the cured product of the curable resin composition include the cured product of a thermosetting resin composition or an ionizing radiation curable resin composition. As the thermosetting resin composition and the ionizing radiation curable resin composition, there can be used the same ones as those exemplified as the thermosetting resin composition and the ionizing radiation curable resin composition of the release layer. In consideration of the ease of patterning and the shape retention during transfer, the pattern layer is particularly preferably an ionizing radiation curable resin composition, and more preferably an electron beam curable resin composition.

The ionizing radiation curable resin used for a pattern layer is preferably a polymerizable monomer, a polymerizable oligomer, or a mixture thereof.

As the polymerizable monomer, a (meth)acrylate monomer having a radically polymerizable unsaturated group in the molecule is preferable, and a polyfunctional (meth)acrylate monomer is particularly preferable. As the polyfunctional (meth)acrylate monomer, there can be used a (meth)acrylate monomer having two or more (bifunctional or more), preferably three or more (trifunctional or more) polymerizable unsaturated bonds in the molecule.

A common substance such as pentaerythritol tri (meth)acrylate may be used as the polyfunctional (meth)acrylate.

As a polymerizable oligomer, a (meth)acrylate oligomer having a radically polymerizable unsaturated group in the molecule is preferable, and a polyfunctional (meth)acrylate oligomer having two or more (bifunctional or more) polymerizable unsaturated bonds in the molecule is particularly preferable.

As the polyfunctional (meth)acrylate oligomer, there may be used a common substance such as polycarbonate (meth)acrylate, acrylic (meth)acrylate, and acrylic silicone (meth)acrylate.

These ionizing radiation curable resins may be used singly or in combination of two or more.

Additives such as a leveling agent, a thixotropy-imparting agent, an antifoaming agent, an extender pigment, and a matting agent can be added to the resin composition of the pattern layer, as necessary.

A pattern layer is preferably a pattern having a plurality of convex portions (convex pattern). As shown in Fig. 1, the region between the convex portions may be a region where the above resin composition does not exist and a base layer (for example, substrate) is exposed. Alternatively, the region between the convex portions may include the cured product of the same resin composition as the convex portion, and may be a recess portion lower than the convex portion.

In Fig. 1, a convex portion having a rectangular cross section is illustrated, but the shape of the convex portion is not particularly limited. For example, the cross section of the convex portion can be, for example, trapezoidal, triangular, and dome-shaped.

In the present invention, as shown in Fig. 2, the height H from the bottom of a convex portion 26a (the layer on which a pattern layer is formed) to the top of the convex portion 26a is calculated, and the thickness of the pattern layer is represented as the average of the heights H at 30 points. The thickness of the pattern layer needs to be 5 µm or more and 20 µm or less, from the viewpoints of the ease of pattern formation, transfer suitability, and visual effect and the feel of the decorative molded article after transfer.

In addition, the ratio of the thickness of a pattern layer to the total thickness of a substrate and a release layer (pattern layer thickness / (substrate thickness + release layer thickness)) is preferably 0.025 or more, more preferably 0.04 or more, and still more preferably 0.05 or more. Setting the above ratio can appropriately impart the pattern caused by the pattern layer to a decorative molded article. In addition, the thickness ratio is preferably 2.4 or less, more preferably 1.2 or less, and still more preferably 0.63 or less. Setting the upper limit value of the thickness ratio as described above allows the pattern caused by the pattern layer in forming a decorative molded article to be barely recognized visually.

In the present invention, the width W of the convex portion constituting a pattern layer is the width of the bottom of the convex portion in the direction orthogonal to the direction in which the convex portion extends (in the example shown in Fig. 2, the direction orthogonal to the paper surface). The width W of the convex portion is 0.15 mm or more, and 10 mm or less.

Setting the width W of the convex portion in the above range allows not only easily forming the pattern layer, but also appropriately adding the pattern to a decorative molded article, thereby improving the feel of the surface of the decorative molded article. In addition, the pattern caused by the pattern layer in forming a decorative molded article can be barely recognized visually. From the viewpoint of the feel of a decorative molded article, the width W of the convex portion is 10 mm or less, and particularly preferably 0.80 mm or less.

The width W of the convex portion is determined by calculating the average width of the convex portion at any point on the surface of the pattern layer by using a laser scanning microscope VK-X1000 produced by KEYENCE CORPORATION and then obtaining the average value of the measurement results at 30 points in the pattern layer surface.

In the present invention, the ratio (%) of the area of a pattern layer to the total area of a release sheet is preferably 10% or more and 90% or less, more preferably 25% or more and 75% or less, and still more preferably 40% or more and 60% or less, from the viewpoints of the ease of pattern formation, transfer suitability, and visual effect and feel of the decorative molded article after transfer.

A pattern layer can be formed by a known printing method such as a gravure printing method, an offset printing method, a letterpress printing method, and a silk screen printing method. In addition, the pattern layer can be formed by applying the above resin composition onto a substrate, and then curing the resin while embossing.

The thermosetting resin composition and ionizing radiation curable resin composition of a pattern layer may further contain a filler. The filler provides additional hardness to the cured product of the curable resin composition constituting the pattern layer and thus easily transfers the pattern of the pattern layer to a protective layer during molding. The filler added to the pattern layer is not particularly limited; however, silica is particularly preferable. The shape of the filler may be spherical or irregular. The filler is preferably irregularly shaped silica from the viewpoint of a cost. The average particle size of the filler is preferably 1 to 50 µm, and more preferably 5 to 25 µm. The content of the filler is preferably 0.1% by mass or more and 50% by mass or less, and more preferably 0.5% by mass or more and 25% by mass or less with respect to the total solid content of the pattern layer, in consideration of, for example, the hardness of the pattern layer and the ease of patterning of the pattern layer.

### <Other Layer>

The resin layer (blocking resin layer) containing a filler may be formed between a substrate and a pattern layer. Forming the resin layer can prevent blocking when a roll-shaped transfer film is produced.

An antistatic layer may be provided on a substrate surface that is opposite side of a release layer. The antistatic layer is preferably provided between the substrate and a pattern layer. Providing the antistatic layer can suppress the charge on a transfer sheet, thereby reducing foreign matter adhesion for example. This can improve transfer workability.

The antistatic layer may be in contact with the substrate, and the above blocking preventive layer or primer layer may be provided between the antistatic layer and the substrate.

### [Transfer Layer]

### <Protective Layer>

A protective layer is provided on the release sheet side of a transfer layer. Before a molded article is produced, the surface of the protective layer on the release sheet side has the shape copying the surface of the release layer. Particularly, the protective layer is preferably in contact with the release layer. In this case, the surface of the protective layer on the release sheet side has the complementary shape to the surface of the release layer. That is, after the release sheet and a transfer layer are peeled off from each other, the surface of the protective layer on the release sheet side particularly preferably has a gloss value of 60 or less with incident light at 60°.

A protective layer preferably includes a cured product of a curable resin composition. Examples of the cured product of the curable resin composition include the cured product of a thermosetting resin composition, the cured product of an ionizing radiation curable resin composition, and a mixture of a mixture thereof, and of these, the cured product of the ionizing radiation curable resin composition is preferable from the viewpoint of abrasion resistance of the protective layer. In addition, of the cured products of the ionizing radiation curable resin composition, the cured product of the electron beam curable resin composition is preferable from the viewpoints of easy completion of crosslinked hardening in formation of the protective layer and the shape followability to the surface of the release layer.

The thermosetting resin composition is at least a composition including a thermosetting resin and is a resin composition that is cured by heating. Examples of the thermosetting resin include an acrylic resin, a urethane resin, a phenol resin, an urea melamine resin, an epoxy resin, an unsaturated polyester resin, and a silicone resin. For the thermosetting resin composition, a curing agent is added to these thermosetting resins as necessary.

Specifically, the ionizing radiation curable resin can be used by appropriately selecting from the group consisting of polymerizable monomers and polymerizable oligomers commonly used as ionizing radiation curable resins.

As a polymerizable monomer, a (meth)acrylate-based monomer having a radically polymerizable unsaturated group in the molecule is preferable, and a polyfunctional (meth)acrylate monomer is particularly preferable.

Examples of the polyfunctional (meth)acrylate monomer include a (meth)acrylate monomer having two or more ionizing radiation curable functional groups in the molecule and having at least a (meth)acryloyl group as the functional group, and the acrylate monomer having an acryloyl group is preferable. These polymerizable oligomers may be used singly or in combination of two or more.

The number of functional groups of the polymerizable monomer is preferably 2 or more and 8 or less, more preferably 2 or more and 6 or less, still more preferably 2 or more and 4 or less, and particularly preferably 2 or more and 3 or less.

Examples of the polymerizable oligomer include a (meth)acrylate oligomer having two or more ionizing radiation curable functional groups in the molecule and having at least a (meth)acryloyl group as the functional group. Examples thereof include a urethane (meth)acrylate oligomer, an epoxy (meth)acrylate oligomer, a polyester (meth)acrylate oligomer, a polyether (meth)acrylate oligomer, a polycarbonate (meth)acrylate oligomer, and an acrylic (meth)acrylate oligomer.

These polymerizable oligomers may be used singly or in combination of two or more.

Of polymerizable oligomers, polycarbonate (meth)acrylate oligomers are preferable. The polycarbonate (meth)acrylate oligomer is not particularly limited as long as it has carbonate binding on the main chain and (meth)acrylate groups on the end or side chains, and may be a polycarbonate-based urethane (meth)acrylate oligomer that is a urethane (meth)acrylate oligomer having a polycarbonate skeleton.

From the viewpoints of heat resistance and moldability, the number of functional groups of these polymerizable oligomers is preferably 2 or more and 8 or less, and the upper limit of the number of functional groups is more preferably 6 or less, still more preferably 4 or less, and particularly preferably 3 or less.

From the viewpoints of heat resistance and moldability, the weight average molecular weight of the monomer and oligomer used for a protective layer is preferably 250 or more and 30000 or less, more preferably 250 or more and 20000 or less, and still more preferably 250 or more and 15000 or less.

A protective layer may also further contain a thermoplastic resin as a resin component other than the cured product of the curable resin composition. The protective layer including the thermoplastic resin prevents cracking during molding and provides good moldability. Common resins such as an acrylic based resin, a polyester-based resin, and a urethane-based resin can be used for the thermoplastic resin.

The content of the thermoplastic resin is preferably 0.1 to 20% by mass, more preferably 0.5 to 10% by mass, and still more preferably 1 to 5% by mass, with respect to the total solid content of the protective layer.

A protective layer preferably substantially contains no particles such as organic particles or inorganic particles. The protective layer containing no particles can easily provide visual recognition of the pattern of an underlying print layer.

Substantially containing no particles in the protective layer means that particles account for 1% by mass or less of the total solid content of the protective layer, preferably 0.1% by mass or less, more preferably 0.01% by mass or less, and still more preferably 0% by mass.

The thickness of a protective layer is preferably 0.5 to 30 µm, more preferably 1 to 20 µm, and still more preferably 1 to 10 µm, from the viewpoint of the balance between surface hardness and moldability.

A protective layer can be formed by a known printing method such as a gravure printing method, an offset printing method, a letterpress printing method, and a silk screen printing method.

A thermosetting resin composition and/or an ionizing radiation curable resin composition may be completely cured in forming a protective layer; however, from the viewpoint of moldability, the thermosetting resin composition and/or the ionizing radiation curable resin composition are uncured or semi-cured in forming the protective layer, are transferred to an adherend, and then may be progressively cured to result in complete curing.

### <Print Layer>

A print layer is a layer for providing the desired design decorativeness to a decorative molded article.

The pattern of the print layer is arbitrary, for example, wood, stone, fabric, sand, circle, square, polygon, geometric patterns, characters, and solid printing.

A print layer preferably includes a binder resin such as a polyvinyl-based resin, a polyester-based resin, an acrylic based resin, a polyvinyl acetal-based resin, and a cellulose-based resin, and a pigment and/or a dye.

The thickness of the print layer is preferably 0.5 to 40 µm, and more preferably 1 to 30 µm, from the viewpoint of design decorativeness.

A print layer can be formed by a known printing method such as a gravure printing method, an offset printing method, a letterpress printing method, and a silk screen printing method.

### <Adhesive Layer>

An adhesive layer has a role to improve adhesiveness between the adherend such as a resin molded body and a transfer layer. When the adhesiveness between a protective layer and the adherend is good, no adhesive layer may be provided.

The resin having the adhesiveness suitable for the material of the adherend is preferably used for an adhesive layer. For example, when the adherend material is acrylic based resin, acrylic based resin is preferably used. In addition, when the material of the adherend is polyphenylene oxide/polystyrene based resin, polycarbonate-based resin, or styrene-based resin, it is preferable to use a resin having an affinity for these resins, for example, an acrylic based resin, a polystyrene-based resin, or a polyamide-based resin. Furthermore, when the material of the adherend is polypropylene resin, it is preferable to use a chlorinated polyolefin resin, a chlorinated ethylene-vinyl acetate copolymer resin, a cyclized rubber, or a coumarone-indene resin.

The adhesive layer may be formulated with an additive such as an ultraviolet absorber and an infrared absorber.

The thickness of the adhesive layer is preferably 0.1 to 10 µm, and more preferably 0.5 to 5 µm.

An adhesive layer can be formed by a known printing method such as a gravure printing method, an offset printing method, a letterpress printing method, and a silk screen printing method.

### <Primer Layer>

A primer layer is a layer that is provided as necessary to improve the adhesion between a protective layer and a print layer.

Preferably, a primer layer mainly includes a resin composition. In addition, in consideration of providing heat resistance, the resin component of the primer layer preferably includes a cured product of a curable resin composition, when placed in a high temperature environment such as in-mold molding.

Examples of the curable resin composition include a thermosetting resin composition and an ionizing radiation curable resin composition. As the thermosetting resin composition and the ionizing radiation curable resin composition of the primer layer, there can be used the same ones as those exemplified as the thermosetting resin composition and the ionizing radiation curable resin composition of the protective layer.

Particularly, the primer layer preferably includes the cured product of a thermosetting resin composition. Examples of the thermosetting resin composition include a two-component curable urethane resin including a various polyol compound such as a polyether polyol, a polyester polyol, and an acrylic polyol, and a curing agent such as an isocyanate compound.

The thickness of a primer layer is preferably 0.1 to 6 µm, and more preferably 0.5 to 5 µm.

The primer layer may have a single layer structure; however, it may also have a structure in which two or more layers are laminated, in consideration of, for example, adhesion between layers.

A primer layer can be formed by a known printing method such as a gravure printing method, an offset printing method, a letterpress printing method, and a silk screen printing method.

### [Decorative Molded article]

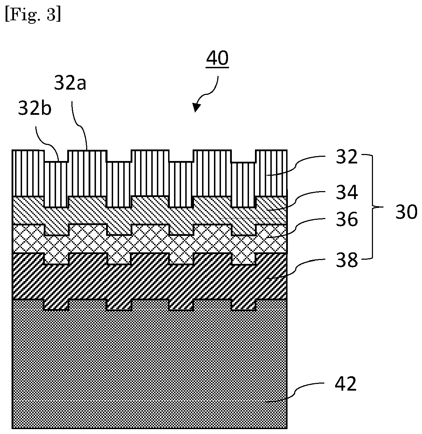

The decorative molded article produced by using the transfer sheet of the present invention will be described with reference to Fig. 3. Fig. 3 is a schematic cross-sectional view of a decorative molded article. A decorative molded article 40 has an adherend 42 and a transfer layer 30 that covers the adherend. In Fig. 3, the transfer layer 30 includes an adhesive layer 38, a print layer 36, a primer layer 34, and a protective layer 32 in this order from the side of the adherend 42. The protective layer 32 is located on the outermost layer of the decorative molded article 40.

### <Adherend>

An adherend is a resin molded body composed of resin. The shape of the adherend may be a flat shape or a three-dimensional shape having, for example, a curved surface. In addition, the adherend may be colored.

The resin molded body can be formed from an injection-moldable thermoplastic resin or thermosetting resin.

When a decorative molded article is produced by in-mold molding, it is preferable to use a thermoplastic resin as the resin molded article. Examples of these thermoplastic resins include a polystyrene-based resin, a polyolefin-based resin, an ABS resin (including a heat resistant ABS resin), an AS resin, a PC/ABS based resin, a PC/AS based resin, an AN resin, a polyphenylene oxide based resin, a polycarbonate-based resin, a polyacetal-based resin, an acrylic based resin, a polyethylene terephthalate based resin, a polybutylene terephthalate based resin, a polysulfone based resin, and a polyphenylene sulfide based resin.

### <Protective Layer>

The protective layer of the decorative molded article produced by using the transfer sheet of the present invention has a first region (reference numeral 32a in Fig. 3) and a second region (reference numeral 32b in Fig. 3) on the outermost surface. The first region is a region having a shape complementary to the surface of the release layer having a gloss value of 60 or less at an incident angle of 60°. The second region is a region having a recess pattern formed by the pattern layer of the transfer sheet while having a shape complementary to the surface of the release layer.

In the present invention, the protective layer has the first region, and therefore the user can visually recognize the pattern of the lower print layer while a matte effect to the decorative molded article is imparted. Furthermore, combining the first region and the second region can provide the design such that the patterning by the second region is barely recognized visually by the user, the appearance is good, and the patterning by the second region can be felt when the user touches the surface of the protective layer.

Specifically, the first region has a fine unevenness shape, and the second region is composed of the recess portion deeper than the first region. The depth of the recess portion in the second region is preferably 3 µm or more and 30 µm or less, more preferably 5 µm or more and 30 µm or less, and still more preferably 10 µm or more and 25 µm or less. The width of the recess portion in the second region is preferably 10 µm or more and 100 µm or less, more preferably 10 µm or more and 80 µm or less, and still more preferably 20 µm or more and 70 µm or less.

### [Method for producing Decorative Molded article]

The transfer sheet of the present invention is particularly preferably applied to the produce of the decorative molded article by in-mold molding (injection molding simultaneous transfer decoration method). The present invention can provide the decorative molded article in which the protective layer having the above first region and second region is formed on the resin molded article having a complicated surface shape such as a three-dimensional curved surface.

One embodiment of the method of producing a decorative molded article by in-mold molding has the following steps:
(S1) a step of arranging a transfer layer side of a transfer sheet toward the inside of an in-mold molding die;
(S2) a step of injecting a resin for an adherend into the in-mold molding die;
(S3) a step of integrating the transfer sheet and the above resin to form a laminate in which the transfer sheet is laminated on the surface of a resin molded body (adherend); and
(S4) a step of peeling off the release sheet of the transfer sheet after taking out the laminate from the die or in simultaneously taking out the resin molded body from the die.

In the present invention, a pattern layer is pressed against the die by injecting a resin, and a transfer sheet is deformed with following the shape of the pattern layer. As a result, a second region is formed on the surface of a decorative molded article.

### Examples

Then, the present invention will be described in more detail by Examples; however, the present invention is not limited to these examples , but only by the appended claims.

The atmosphere of the following measurement and evaluation was a temperature of 23°C ± 5°C and a humidity of 40 to 65%. In addition, a target sample was exposed to the atmosphere for 30 minutes or more, and measurement and evaluation were performed.

### 1. Evaluation and Measurement

### 1-1. Gloss Value

A release sheet was peeled off from the transfer sheets of Examples and Comparative Examples. The peeled release sheet, with the release layer facing upward (and the pattern layer facing downward), was bonded to a 100 µm black ABS film. Using a glossiness measuring device ("Microgloss" produced by BYK Gardner GmbH), a gloss value was measured at an angle of 60° at any 20 points on the surface of the release layer in accordance with JIS Z8741: 1997. The average value of the measured gloss values was used as the gloss value of the release layer of Examples and Comparative Examples.

### 1-2. Pattern Visibility Evaluation

The decorative molded articles produced in Examples and Comparative Examples were visually checked for the presence or absence of a wood conduit pattern on the surface of a protective layer under a fluorescent lamp. As 2 points when the pattern failed to be confirmed, 1 point when the pattern was slightly visible in changing the angle, and 0 points when the pattern was clearly visible, 20 subjects evaluated and the average score was calculated. The visibility of each decorative molded article was evaluated based on the following criteria.
A: average score of 1.6 or more
B: average score of 1.0 or more and less than 1.6
C: average score of less than 1.0

### 1-3. Feel Evaluation

The decorative molded articles produced in Examples and Comparative Examples were checked for touch on the surface of a protective layer. As 2 points when the unevenness of the surface of the protective layer was clearly felt with subject fingers, 1 point when felt slightly, and 0 points when felt smooth, 20 subjects evaluated and the average score was calculated. The feel of each decorative molded article was evaluated based on the following criteria.
A+: average score of 1.8 or more
A-: average score of 1.5 or more and less than 1.8
B+: average score of 1.2 or more and less than 1.5
B-: average score of 1.0 or more and less than 1.2
C: average score of less than 1.0

### 2. Production of Transfer Sheet

### (Example 1)

The coating liquid for a release layer according to the following formulation was applied onto one side of a substrate (biaxially stretched polyethylene terephthalate film having a thickness of 75 µm), and an electron beam was irradiated under the conditions of 165 KeV and 7 Mrad (70 kGy) to form the release layer having a thickness of 2 µm.

Then, the coating liquid for a protective layer having the following formulation was applied onto the release layer, and an electron beam was irradiated under the conditions of 165 KeV and 5 Mrad (50 kGy) to form the protective layer having a thickness of 3 µm.

Then, the coating liquid for a primer layer having the following formulation was applied onto the protective layer and dried to form the primer layer having a thickness of 2 µm.

Then, brown ink (acrylic based resin composition) was applied onto the primer layer by using a gravure printing method and dried to form the wood-pattern print layer having a thickness of 6 µm.

Then, a thermoplastic resin (acrylic based resin) had been diluted with a solvent and the resultant coating liquid for an adhesive layer was applied onto the print layer and dried to be formed into the 2 µm thick adhesive layer having heat sealing properties.

### <Coating Liquid for Mold Release Layer>

Bifunctional urethane acrylate (weight average molecular weight: 8000) 85 parts by mass
Trifunctional acrylate monomer (weight average molecular weight: 300) 15 parts by mass
Electron beam curable silicone compound 1 part by mass
Matting agent (irregularly shaped silica, average particle size 2.0 µm) 10 parts by mass
Solvent (methyl ethyl ketone) appropriate amount

### <Coating Liquid for Protective Layer>

Bifunctional urethane acrylate (weight average molecular weight: 10000) 95 parts by mass
Trifunctional acrylate monomer (weight average molecular weight: 300) 5 parts by mass
Solvent (methyl ethyl ketone) appropriate amount

### <Coating Liquid for Primer Layer>

Acrylic polymer polyol (weight average molecular weight: 35000) 100 parts by mass
m-Xylylene diisocyanate (XDI) 10 parts by mass
Solvent (methyl ethyl ketone) appropriate amount

The coating liquid for a pattern layer having the following formulation was applied onto the surface opposite to the surface on which the release layer of the substrate was formed, by a screen printing method, and the pattern layer was cured by ultraviolet light (1000 mJ/cm²) irradiated from the pattern layer side. The pattern layer was a wood conduit pattern with a thickness of 10 µm and a width of a convex portion of 0.49 mm.

Through the above steps, the transfer sheet of Example 1 was obtained.

### <Coating Liquid for Pattern Layer>

Acrylic acrylate (weight average molecular weight: 110000) 100 parts by mass
Photopolymerization initiator (1-hydroxycyclohexylphenylketone) 1.5 parts by mass

### (Example 2)

The transfer sheet of Example 2 was obtained in the same manner as in Example 1, except that silica particles (irregularly shaped silica, average particle size 2.0 µm) was formulated in the coating liquid for the release layer according to Example 1 at a ratio of 4 parts by mass to 100 parts by mass of a resin and the width of a convex portion was 0.50 mm.

### (Example 3)

The transfer sheet of Example 3 was obtained in the same manner as in Example 1, except that silica particles (irregularly shaped silica, average particle size 2.0 µm) was formulated in the coating liquid for the release layer according to Example 1 at a ratio of 2 parts by mass to 100 parts by mass of a resin and the width of a convex portion was 0.50 mm.

### (Example 4)

The transfer sheet of Example 4 was obtained in the same step as in Example 1, except that the thickness of a pattern layer was changed to be 20 µm and the width of a convex portion to be 0.21 mm.

### (Example 5)

The transfer sheet of Example 5 was obtained in the same step as in Example 1, except that the thickness of a pattern layer was changed to be 20 µm and the width of a convex portion to be 0.49 mm.

### (Example 6)

The transfer sheet of Example 6 was obtained in the same step as in Example 1, except that the thickness of a pattern layer was changed to be 20 µm and the width of a convex portion to be 0.70 mm.

### (Example 7)

The transfer sheet of Example 7 was obtained in the same step as in Example 1, except that the thickness of a pattern layer was changed to be 20 µm and the width of a convex portion to be 0.90 mm.

### (Example 8)

The transfer sheet of Example 8 was obtained in the same step as in Example 1, except that the thickness of a pattern layer was changed to be 20 µm and the width of a convex portion to be 3.00 mm.

### (Example 9)

The transfer sheet of Example 9 was obtained in the same step as in Example 1, except that the thickness of a pattern layer was changed to be 20 µm and the width of a convex portion to be 4.02 mm.

### (Example 10, not part of the invention)

The transfer sheet of Example 10 was obtained in the same step as in Example 1, except that the thickness of a pattern layer was changed to be 20 µm and the width of a convex portion to be 40.03 mm.

### (Example 11, not part of the invention)

The transfer sheet of Example 11 was obtained in the same step as in Example 1, except that the thickness of a pattern layer was changed to be 20 µm and the width of a convex portion to be 0.04 mm.

### (Example 12, not part of the invention)

The transfer sheet of Example 12 was obtained in the same step as in Example 1, except that the thickness of a pattern layer was changed to be 20 µm and the width of a convex portion to be 80.01 mm.

### (Example 13)

The transfer sheet of Example 13 was obtained in the same step as in Example 1, except that the thickness of a pattern layer was changed to be 5 µm and the width of a convex portion to be 0.50 mm.

### (Example 14, not part of the invention)

The transfer sheet of Example 14 was obtained in the same step as in Example 1, except that the thickness of a pattern layer was changed to be 30 µm and the width of a convex portion to be 0.51 mm.

### (Example 15, not part of the invention)

The transfer sheet of Example 15 was obtained in the same step as in Example 1, except that the same coating liquid for a release layer as in Example 2 was used and the thickness of a pattern layer was 30 µm.

### (Example 16, not part of the invention)

The transfer sheet of Example 16 was obtained in the same step as in Example 1, except that the same coating liquid for a release layer as in Example 3 was used, the thickness of a pattern layer was 30 µm, and the width of a convex portion was changed to be 30 µm.

### (Comparative Example 1)

The transfer sheet of Comparative Example 1 was obtained in the same step as in Example 1, except that no matting agent was added to a release layer in Example 1 and the width of a convex portion was changed to be 0.50 mm.

### (Comparative Example 2)

The transfer sheet of Comparative Example 2 was obtained in the same step as in Example 1, except that the thickness of a pattern layer was 1 µm, the width of a convex portion was 0.48 mm, and a gravure printing was used for formation.

### (Comparative Example 3)

The transfer sheet of Comparative Example 3 was obtained in the same step as in Example 1, except that the thickness of a pattern layer was 50 µm and the width of a convex portion was 0.50 mm.

### (Comparative Example 4)

The transfer sheet of Comparative Example 4 was obtained in the same step as in Example 1, except that the same coating liquid for a release layer as in Example 2 was used, the thickness of a pattern layer was 50 µm, and the width of a convex portion was 0.51 mm.

### (Comparative Example 5)

The transfer sheet of Comparative Example 5 was obtained in the same step as in Example 1, except that the same coating liquid for a release layer as in Example 3 was used, the thickness of a pattern layer was 50 µm, and the width of a convex portion was 0.51 mm.

### 3. Production of Decorative Molded Article

Each of the transfer sheets of Examples 1 to 16 and Comparative Examples 1 to 5 was arranged on one side of a pair of upper and lower in-mold molding dies. An adhesive layer was arranged so as to face the inside of the die (the side in contact with an injection resin).

Then, the die was tightened, the injection resin (PC/ABS resin resin) was injected into the die to provide a laminate (plate-shaped body having 10 cm × 16 cm × 2 mm thick) in which the transfer sheet and the injection resin layer including the injection resin were integrated with each other.

Then, the die was opened, and then the transfer sheet (substrate to release layer) was peeling off from the laminate to provide the decorative molded articles of Examples 1 to 16 and Comparative Examples 1 to 5.

### 4. Result

The evaluation results of the transfer sheets and the decorative molded articles of Examples and Comparative Examples are shown in Table 1.

**Table 1**

| | Pattern layer | | Release layer | Decorative molded article | |
|---|---|---|---|---|---|
| | Thickness (µm) | Width of convex portion (mm) | Gloss value (incident angle 60°) | Pattern visibility | Feel |
| Example 1 | 10 | 0.49 | 11 | A | A⁺ |
| Example 2 | 10 | 0.50 | 43 | A | A⁺ |
| Example 3 | 10 | 0.50 | 60 | B | A⁺ |
| Example 4 | 20 | 0.21 | 11 | A | A⁻ |
| Example 5 | 20 | 0.49 | 11 | A | A⁺ |
| Example 6 | 20 | 0.70 | 11 | A | A⁺ |
| Example 7 | 20 | 0.90 | 11 | A | A⁻ |
| Example 8 | 20 | 3.00 | 11 | A | A⁻ |
| Example 9 | 20 | 4.02 | 11 | A | A⁻ |
| Example 10 | 20 | 40.03 | 11 | A | B⁺ |
| Example 11 | 20 | 0.04 | 11 | A | B⁻ |
| Example 12 | 20 | 80.01 | 11 | A | B⁻ |
| Example 13 | 5 | 0.50 | 11 | A | A⁻ |
| Example 14 | 30 | 0.51 | 11 | B | A⁺ |
| Example 15 | 30 | 0.49 | 43 | B | A⁺ |
| Example 16 | 30 | 0.50 | 60 | B | A⁺ |
| Comparative Example 1 | 10 | 0.50 | 95 | C | A⁺ |
| Comparative Example 2 | 1 | 0.48 | 11 | A | C |
| Comparative Example 3 | 50 | 0.50 | 11 | C | A⁺ |
| Comparative Example 4 | 50 | 0.51 | 43 | C | A⁺ |
| Comparative Example 5 | 50 | 0.51 | 60 | C | A⁺ |

All of decorative molded articles using the transfer sheet of Examples provided hard visual recognition and a good aesthetic appearance, and allows the feel of the pattern. Particularly, in Examples 1 and 2 and 4 to 13, all of subjects failed to visually recognize the pattern. Regarding the feel, Examples 1 to 3 and 5 and 6, and 14 to 16 were excellent.

In Comparative Example 1, the feel was good; however, the high gloss value allowed all of subjects to visually recognize the pattern. In Comparative Example 2, the pattern visibility was "A" evaluation, and this is because the pattern was not transferred to the surface of a protective layer due to thin pattern layer. In Comparative Examples 3 to 5, the pattern was clearly felt; however, the pattern was visible due to the deeper groove in the pattern.

### Reference Signs List

10 Transfer Sheet
20 Release Sheet
22 Substrate
24 Release Layer
26 Pattern Layer
26a Convex Portion
26b Intersection between Convex Portion and Recess Portion
30 Transfer Layer
32 Protective Layer
34 Primer Layer
36 Print Layer
38 Adhesive Layer
40 Decorative Molded Article
42 Adherends

## Claims

1. A transfer sheet (10), comprising a release sheet (20) and a transfer layer (30),
wherein the release sheet (20) comprises a substrate (22), a release layer (24) provided on one surface of the substrate (22), and a pattern layer (26) on the other surface of the substrate (22),
and
after the release sheet (20) and the transfer layer (30) are peeled off from each other, a gloss value of a surface of the release layer (24) opposite to the substrate (22) with incident light at 60° is 60 or less,
**characterized in that** the pattern layer (26) has a thickness of 5 µm or more and 20 µm or less, and
the pattern layer (26) has a plurality of convex portions (26a) and a width of the convex portions (26a) is 0.15 mm or more and 10 mm or less.

2. The transfer sheet (10) according to claim 1, wherein the pattern layer (26) comprises a cured product of a thermosetting resin composition or a cured product of an ionizing radiation curable resin composition.

3. The transfer sheet (10) according to claim 1 or claim 2, wherein the pattern layer (26) comprises a filler.

4. A method for producing a decorative molded article (40), comprising:
a step of arranging a transfer layer (30) side of the transfer sheet (10) according to any one of claim 1 to claim 3 toward an inside of a die;
a step of injecting a resin into the die;
a step of integrating the transfer sheet (10) and the resin to form a laminate in which the transfer sheet (10) is laminated on a surface of a resin molded body composed of the resin; and
a step of forming a decorative molded article (40) including the transfer layer (30) on the resin molded body by peeling off the release sheet (20) after taking out the laminate from the die or simultaneously in taking out the resin molded body from the die.

## Patentansprüche

1. Transferfolie (10), umfassend eine Abziehfolie (20) und eine Transferschicht (30),
wobei die Abziehfolie (20) ein Substrat (22), eine Abziehschicht (24), die auf einer Oberfläche des Substrats (22) bereitgestellt wird, und eine Motivschicht (26) auf der anderen Oberfläche des Substrats (22) umfasst, und
nachdem die Abziehfolie (20) und die Transferschicht (30) voneinander abgezogen wurden, ein Glanzwert einer Oberfläche der Abziehschicht (24) gegenüber dem Substrat (22) bei einem einfallenden Licht von 60° 60 oder weniger ist,
**dadurch gekennzeichnet, dass**
die Motivschicht (26) eine Dicke von 5 µm oder mehr und 20 µm oder weniger aufweist, und
die Motivschicht (26) eine Vielzahl von konvexen Abschnitten (26a) aufweist, und eine Breite der konvexen Abschnitte (26a) 0,15 mm oder mehr und 10 mm oder weniger beträgt.

2. Transferfolie (10) nach Anspruch 1, wobei die Motivschicht (26) ein ausgehärtetes Produkt aus einer wärmehärtenden Harzzusammensetzung oder ein ausgehärtetes Produkt aus einer mit ionisierender Strahlung aushärtbaren Harzzusammensetzung umfasst.

3. Transferfolie (10) nach Anspruch 1 oder Anspruch 2, wobei die Motivschicht (26) einen Füllstoff umfasst.

4. Verfahren zum Erzeugen eines dekorativen Formartikels (40), umfassend:
einen Schritt zum Anordnen einer Transferschicht- (30) Seite der Transferfolie (10) nach einem der Ansprüche 1 bis 3 zum Innern eines Formwerkzeugs hin;
einen Schritt zum Injizieren eines Harzes in das Formwerkzeug;
einen Schritt zum Integrieren der Transferfolie (10) und des Harzes, um ein Laminat zu bilden, wobei die Transferfolie (10) auf eine Oberfläche eines Harzformkörpers, der aus dem Harz besteht, laminiert wird; und
einen Schritt zum Bilden eines dekorativen Formartikels (40), der die Transferschicht (30) auf dem Harzformkörper umfasst, durch Abziehen der Abziehfolie (20) nach dem Herausnehmen des Laminats aus dem Formwerkzeug oder gleichzeitig mit dem Herausnehmen des Harzformkörpers aus dem Formwerkzeug.

## Revendications

1. Feuille de transfert (10), comprenant une feuille détachable (20) et une couche de transfert (30),
dans laquelle la feuille détachable (20) comprend un substrat (22), une couche détachable (24) fournie sur une surface du substrat (22), et une couche de motifs (26) sur l'autre surface du substrat (22), et
après que la feuille détachable (20) et la couche de transfert (30) ont été détachées l'une de l'autre, une valeur de brillant d'une surface de la couche détachable (24) à l'opposé du substrat (22) sous une lumière incidente à 60° est de 60 ou moins,
**caractérisée en ce que**
la couche de motifs (26) présente une épaisseur de 5 µm ou plus et de 20 µm ou moins, et
la couche de motifs (26) présente une pluralité de parties convexes (26a), et une largeur des parties convexes (26a) est de 0,15 mm ou plus et de 10 mm ou moins.

2. Feuille de transfert (10) selon la revendication 1, dans laquelle la couche de motifs (26) comprend un produit durci d'une composition de résine thermodurcissable ou un produit durci d'une composition de résine durcissable par rayonnement ionisant.

3. Feuille de transfert (10) selon la revendication 1 ou la revendication 2, dans laquelle la couche de motifs (26) comprend une matière de remplissage.

4. Procédé permettant de produire un article moulé décoratif (40), comprenant :
une étape d'agencement d'un côté de couche de transfert (30) de la feuille de transfert (10) selon l'une quelconque des revendications 1 à 3 vers l'intérieur d'un moule ;
une étape d'injection d'une résine dans le moule ;
une étape d'intégration de la feuille de transfert (10) et de la résine pour former un laminé dans lequel la feuille de transfert (10) est laminée sur une surface d'un corps moulé de résine composé de la résine ; et
une étape de formation d'un article moulé décoratif (40) comprenant la couche de transfert (30) sur le corps moulé de résine en détachant la feuille détachable (20) après le retrait du laminé du moule ou en même temps que le retrait du corps moulé de résine du moule.
